# FASCICULE DE BREVET EUROPEEN

(11) **EP 2 380 328 B1**
(45) Date de publication et mention de la délivrance du brevet: **15.05.2019**
(21) Numéro de dépôt: 09806106.2
(22) Date de dépôt: 23.12.2009
(51) Int. Cl.: H04L 29/06, H04L 29/08, G06F 9/46

(54) **SERVEUR PASSERELLE À MICRONOYAU**
MICROKERNEL-GATEWAY-SERVER
MICROKERNEL GATEWAY SERVER

(30) Priorité: 30.12.2008 FR 0859143
(43) Date de publication de la demande: 26.10.2011
(73) Titulaire: Eads Secure Networks, 78896 Elancourt (FR)
(72) Inventeur: MEIER, Guillaume, F-75015 Paris (FR); CHALAND, Marc, F-78320 Levis St Nom (FR); CLERMONT, Nicolas, F-94800 Villejuif (FR); HAUGUET, Francis, F-78180 Montigny le Bretonneux (FR)
(74) Mandataire: Camus, Olivier Jean-Claude
(86) Numéro de dépôt international: PCT/FR2009/052687
(87) Numéro de publication internationale: WO 2010/076523

(56) Documents cités:
- US-A- 5 828 893
- US-A1- 2004 205 208
- US-A1- 2007 110 436
- KEVIN ELPHINSTONE: "Future Directions in the Evolution of the L4 Microkernel" PROCEEDINGS OF THE NICTA WORKSHOP ON OS VERIFICATION 2004, [Online] 2004, pages 1-17, XP002548965 Extrait de l'Internet: URL:http://ertos.nicta.com.au/publications /papers/Elphinstone_04.pdf> [extrait le 2009-10-01]

## Description

La présente invention concerne un serveur passerelle muni d'un micronoyau. Elle concerne également un procédé de transmission de données entre des réseaux via un tel serveur passerelle.

Les systèmes d'exploitation classiques, tels que Microsoft Windows ou GNU/Linux, n'ont pas été conçus avec de fortes contraintes de sécurité. Le résultat est une conception faiblement sécurisée sous forme d'un système d'exploitation qui utilise des couches opératives pouvant être représentées selon divers modèles, tel que le modèle OSI, de l'anglais « Open Systems Interconnection ».

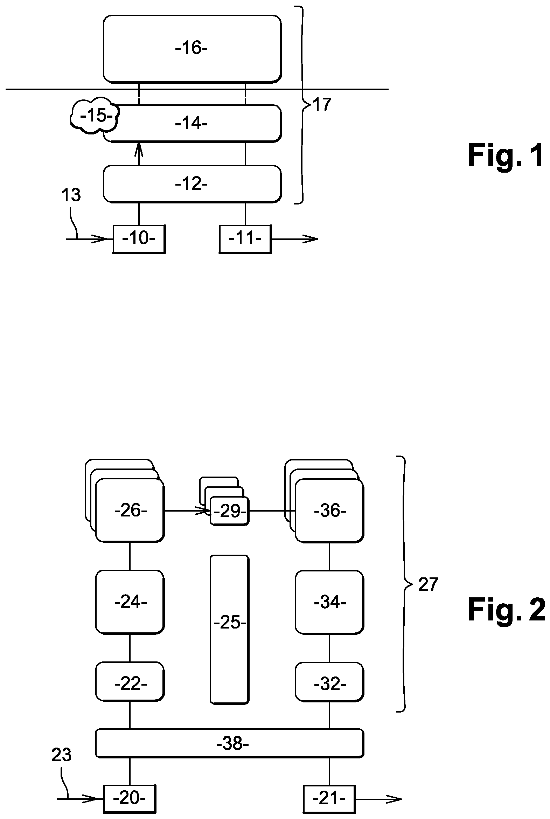

Dans le cadre d'un serveur passerelle 17 (figure 1), également dénommé mandataire ou « proxy » en l'anglais, cette représentation peut être simplement effectuée en trois niveaux :
- Un premier niveau 16 de contrôle comprend un noyau gérant les opérations effectuées par les applications du système d'exploitation, notamment en allouant des ressources à ces applications et en contrôlant les communications entre ces ressources. Le noyau est typiquement un noyau monolithique, même si une approche modulaire peut être choisie pour gérer particulièrement chaque ressource offerte par le système d'exploitation.

Un tel noyau monolithique inclut des logiciels de bas niveau, tels que l'ordonnanceur, le gestionnaire de processus, le gestionnaire de mémoire, ainsi que les pilotes des périphériques et quelques services de haut niveau tels que les systèmes de fichier et des algorithmes cryptographiques ou de filtrage.
- Un second niveau 14 de communication comprend les applications logicielles, notamment formant les piles de protocoles requises pour émettre ou recevoir des données via un réseau de télécommunication utilisant un protocole de communication.

Dans une pile de protocoles, chaque couche résout un certain nombre de problèmes relatifs à la transmission de données, et fournit des services bien définis aux couches supérieures du premier niveau 16. Ces couches hautes sont plus proches de l'utilisateur et gèrent des données plus abstraites, en utilisant les services des couches basses qui mettent en forme ces données afin qu'elles puissent être émises sur un medium physique.
- Un troisième niveau 12 média effectuant l'interface du serveur 17 avec un réseau extérieur 10 ou 11. Ce niveau 12 est typiquement conforme au protocole Ethernet implémentant une couche physique et une sous-couche logicielle, à savoir la couche Media Access Control (MAC) du modèle OSI.

Une telle passerelle 17 peut avoir une fonction de filtrage destinée à assurer la transmission de données 13 reçues, par exemple, d'un réseau non sécurisé 10 tel que le réseau Internet à destination d'un réseau sensible 11. Dans ce cas, ces données 13 sont traitées :
- Par le niveau 12 Ethernet du serveur passerelle 17 afin de permettre leur traitement dans le serveur, puis
- Par le niveau 14 de communication comprenant une pile de protocoles TCP/IP, pour « Transmission Control Protocol » et « Internet Protocol » en anglais, afin de générer des données, transmises selon des protocoles de transport, conformes à des protocoles applicatifs, puis finalement
- Par le niveau 16 de contrôle mettant en oeuvre des services de filtrage de haut niveau permettant, par exemple, de décrypter les données avant leur transmission au réseau sensible 11.

Le document US5828893 décrit un système avec deux serveurs passerelles dont les couches applicatives communiquent via un réseau dédié sécurisé.

Le document "Future Directions in the Evolution of the L4 Microkernel" de K. Elphinstone, Proceedings of the NICTA Workshop on OS Vérification, pages 1-17, 2004, décrit un micronoyau, un contrôleur d' IPC et une mémoire partagée adaptés pour gérer des communications.

La présente invention résulte de la constatation qu'un tel serveur, et le procédé requis pour sa mise en oeuvre, présentent des inconvénients. Notamment, ils présentent des faiblesses propres à la complexité d'un noyau monolithique et à l'architecture d'un système informatique qui ne permet pas une vérification formelle de la vulnérabilité d'un serveur passerelle.

Plus précisément, aucun mécanisme ne permet de prouver que les données venant de 10 passent successivement par toutes les étapes du filtrage réalisées par les niveaux 12, 14 et 16. Ainsi, un dysfonctionnement 15, volontaire ou accidentel, peut se produire sur un de ces niveaux 12 ou 14 et aboutir à un contournement du niveau 16 de contrôle.

A titre d'exemple, un tel dysfonctionnement 15 est représenté au niveau 14 de communication, par exemple au sein de la couche propre à la pile TCP/IP. Dans ce cas, ce dysfonctionnement 15 transmet des données provenant du réseau 10 au réseau 11 sans la transmission préalable de ces dernières au niveau 16 de contrôle.

Il est alors possible d'accéder au réseau 11 indépendamment des règles de transmission devant être appliquées par le niveau 16 de contrôle, ce qui représente une faille du serveur 17 difficilement acceptable.

Pour répondre à ce problème, la présente invention concerne un serveur passerelle muni d'un premier sous-système comprenant un niveau média, un niveau de communication et un niveau de contrôle, ce serveur comprenant également un micronoyau et un contrôleur d'IPC gérant des communications entre les ressources du serveur allouées au premier sous-système, caractérisé en ce qu'il comprend :
- un second sous-système, comprenant un second niveau média, un second niveau de communication et un second niveau de contrôle tels que le micronoyau et le contrôleur d'IPC gère également des communications entre les ressources du serveur allouées à ce second sous-système, et
- une mémoire partagée en lecture et en écriture, établie sous contrôle du micronoyau et du contrôleur d'IPC, entre le niveau de contrôle du premier sous-système et le niveau de contrôle du second sous-système.

Un tel serveur passerelle répond au problème de l'absence des fonctions de contrôle de transmissions dues à des dysfonctionnements, provoqués ou accidentels, du niveau média et/ou du niveau communication d'un serveur passerelle.

De fait, un tel dysfonctionnement ne peut aboutir à la transmission de données entre des réseaux dans un serveur conforme à l'invention, seul le niveau de contrôle pouvant transmettre des données entre ces réseaux via la mémoire partagée.

Un tel serveur présente donc de nombreux avantages. D'une part, il permet de répondre à un défaut de règles de sécurité clairement établies dans le réseau sensible puisque ces règles peuvent être implémentées par son niveau de contrôle.

Il permet également de prévenir une attaque émanant d'un réseau non sensible et visant à contourner le niveau de sécurité d'un serveur passerelle par contournement de son niveau de contrôle.

Un serveur conforme à l'invention permet ainsi de protéger un réseau sensible d'agressions externes, volontaires ou non. De cette façon il permet d'assurer une politique de sécurité entre des réseaux de sensibilités différentes, par exemple, entre un réseau non-sécurisé et un réseau sensible.

Dans une réalisation, chaque sous-système comprend des moyens pour coder des informations, reçues dans une requête conforme à un protocole de communication réseau, en une structure binaire conforme à un protocole de communication entre les niveaux de contrôle du premier sous-système et du second sous-système.

Dans ce cas, chaque sous-système peut comprendre des moyens pour coder les informations en une structure binaire après traitement de ces dernières dans le niveau de communication puis dans le niveau de contrôle de ce sous-système.

Selon une réalisation, le serveur comprend des moyens pour identifier, en fonction de la nature de la requête, des données caractéristiques de la requête devant être codées dans la structure binaire.

Dans une réalisation, le serveur comprend des moyens pour associer la requête reçue à une requêté prédéfinie dans une liste limitée de requêtes autorisées.

Selon une réalisation, le micronoyau comprend des moyens pour associer chaque application mise en oeuvre par un sous-système au contrôle d'une ressource du serveur.

Dans une réalisation, le serveur comprend des moyens pour limiter les communications de telle sorte que ni le niveau média ni le niveau de communication d'un sous-système ne puisse communiquer directement ni avec le niveau média ni avec le niveau de communication de l'autre sous-système sans l'intermédiaire des niveaux de contrôle des sous-systèmes.

Selon une réalisation, le serveur comprend des moyens pour analyser la syntaxe et la validité des protocoles filtrés par chaque couche utilisée dans le serveur.

L'invention concerne également un procédé de contrôle d'un serveur passerelle muni d'un premier sous-système comprenant un niveau média, un niveau de communication et un niveau de contrôle, ce serveur comprenant également un micronoyau et un contrôleur d'IPC gérant des communications entre les ressources du serveur allouées au premier sous-système, caractérisé en ce que, le serveur étant également muni d'un second sous-système, comprenant un second niveau média, un second niveau de communication et un second niveau de contrôle tels que le micronoyau et le contrôleur d'IPC gère également des communications entre les ressources du serveur allouées à ce second sous-système, on utilise une mémoire partagée en lecture et en écriture, établie sous contrôle du micronoyau, pour transmettre des requêtes entre le niveau de contrôle du premier sous-système et le niveau de contrôle du second sous-système à l'aide d'un serveur conforme à l'une des réalisations précédentes.

Finalement, l'invention concerne également un produit programme d'ordinateur comprenant des instructions de code de programme enregistrées sur un support lisible par un ordinateur pour mettre en oeuvre un procédé conforme à l'invention lorsque ledit programme fonctionne sur un ordinateur.

L'invention sera mieux comprise à la lecture de la description qui suit, donnée uniquement à titre illustratif et non limitatif, et faite en référence aux dessins en annexe dans lesquels :
- la figure 1, déjà décrite, est une vue schématique du fonctionnement d'un serveur passerelle selon l'art antérieur ;
- la figure 2 est une vue schématique du fonctionnement d'un serveur passerelle selon l'invention, et
- la figure 3 représente le traitement d'une requête HTTP par un serveur conforme à l'invention.

En référence à la figure 2, un serveur passerelle 27 conforme à l'invention comprend deux niveaux média 22 et 32, deux niveaux de communication 24 et 34 et deux niveaux de contrôle 26 et 36.

Toutefois, un unique micronoyau 38 est mis en oeuvre pour effectuer quelques fonctions de base dont la gestion des communications entre les ressources du serveur, notamment par transfert de message IPC pour « Inter Process Communication » en anglais.

En plus de cette gestion, un micronoyau de seconde génération comprend un pilote d'horloge et un ordonnanceur de telle sorte qu'un tel micronoyau comprend moins de 20 000 lignes de code.

Comparativement, un noyau monolithique comprend des millions de lignes de code avec un risque proportionnel de bogues et de défauts de sécurité. Il peut difficilement être vérifié comme conforme aux spécifications des vérificateurs de codes et des systèmes de preuve formelle actuels.

De plus, les noyaux monolithiques ont de mauvaises propriétés d'isolement. En fait, les processus utilisateur peuvent casser l'isolement de différentes façons grâce aux tubes, aux fichiers, à la mémoire partagée, etc. La gestion des communications interprocessus n'est pas fiable.

En fait, comme précédemment indiqué, il n'existe pas d'isolement, à l'intérieur d'un noyau monolithique, entre sous-systèmes du noyau comme par exemple entre les pilotes et les piles réseau. Ainsi, un pilote d'un composant matériel bogué ou corrompu peut mettre en danger tout le système.

L'utilisation de micronoyaux dits de deuxième génération résout le problème lié à une faille au sein du niveau de contrôle. Ces micronoyaux ont une taille qui permet de les maintenir aisément et de les vérifier formellement afin, par exemple, de les certifier à un niveau élevé tel que le niveau 7 du standard international EAL pour « Evaluation Assurance Level » en anglais.

A titre d'exemple, les micronoyaux de deuxième génération les plus connus, et actuellement utilisés dans différentes variantes, s'appuient sur une application de programmation, ou API pour « Application Programming Interface » en anglais commune - L4 conçue sous l'impulsion de Jochen Liedtke.

Ainsi, un serveur passerelle muni d'un tel micronoyau permet de répondre à la complexité, et vulnérabilité, des noyaux monolithiques. En termes de sécurité, un tel système bénéficie de la solidité du micronoyau.

Cependant, la sécurité des serveurs dépend également de la solidité des communications IPC car ces dernières représentent un moyen possible de transmission de données dangereuses. Or, pour des raisons d'efficacité, la gestion de la sécurité des communications est traditionnellement laissée au niveau des serveurs, le micronoyau se contentant de transmettre les messages.

C'est pourquoi, dans cette réalisation, le micronoyau 38 comprend un contrôleur 25 IPC offrant un mécanisme de droits de communication de telle sortes que deux applications ne peuvent communiquer entre elles que si le contrôleur 25 reconnaît que ces applications possèdent les droits appropriés.

De fait, le micronoyau considère chaque application, par exemple de services ou de pilotes, comme le sujet des critères de sécurité qui lui sont fournies au préalable.

A partir de ces critères, le micronoyau 38 peut allouer des ressources du système aux applications qu'il gère selon une règle établie à son démarrage tandis que son contrôleur d'IPC 25 alloue ou refuse des droits de communication entre ces applications.

En d'autres termes, le micronoyau 38 identifie, d'une part, des ressources à allouer - telles que la mémoire, les entrées et sorties, des privilèges pour des niveaux de gestion de - et d'autre part des communications en attente d'autorisation du contrôleur d'IPC 25.

Ainsi, lorsqu'une application requiert une communication IPC entre différents éléments, le contrôleur d'IPC 25 détermine à partir de cette liste si l'application requérante a un droit de communication avec l'application destinataire.

Le contrôleur d'IPC 25 effectue donc la fonction de contrôleur IPC pour, par exemple, délivrer des droits de communication à des applications particulières sur demande. De même, ce contrôleur IPC peut détecter des tentatives de violation des critères de sécurité et fournir un audit sur le potentiel de violation.

Dans cette réalisation, le micronoyau 38 a également pour fonction de maintenir pour chaque application les communications préalablement autorisées.

Une telle structure permet un contrôle précis sur l'utilisation des ressources tandis que, simultanément, chaque application est associée au contrôle d'une ressource, c'est-à-dire d'un composant ou mécanisme hardware, ce qui renforce le contrôle pour bloquer la propagation d'une attaque ou d'un bogue.

Dans le serveur 27, le traitement des données utilise donc deux sous-systèmes, à savoir :
-- d'une part un sous-système formé par le niveau 22 média, le niveau 24 de communication et le niveau 26 de contrôle, relié au réseau 20 non sécurisé, par exemple le réseau Internet, et
-- d'autre part un sous-système sécurisé formé par le niveau 32 média, le niveau 34 de communication et le niveau 36 de contrôle, relié au réseau 21 sensible, par exemple un réseau avionique, un intranet de défense et/ou un noeud central de communication.

De fait, chaque sous-système gère un flux de données, par exemple au niveau de son interface réseau ou de sa pile de protocoles, en utilisant ses propres ressources physiques qui sont isolées de l'autre sous-système, excepté entre leur niveau de contrôle comme décrit ultérieurement.

Ainsi, le micronoyau 38 et son contrôleur d'IPC 25 n'autorisent des communications du niveau 22, respectivement 32, média qu'avec le niveau 24, respectivement 34, de communication, ce dernier niveau ne pouvant communiquer qu'avec le niveau de contrôle 26, respectivement 36.

Ainsi, en supposant qu'une attaque ou un bogue issue du réseau 20 réussisse à s'infiltrer à travers une faille dans une des couches du niveau 22 média et/ou du niveau 24 de communication, par exemple dans l'application d'un pilote et/ou de la pile de protocoles, des données ne peuvent être transmises vers le réseau sensible 21 sans leur traitement par le niveau 26 et 36 de contrôle.

Par ailleurs, l'architecture du serveur permet d'effectuer un filtrage en profondeur du réseau, ce filtrage utilisant une analyse de la syntaxe et de la validité des protocoles filtrés par chaque couche du serveur, par exemple : Ethernet, IP, TCP, niveau applicatif.

De ce fait, une requête reçue par le sous-système non sécurisé est transformée, lors de son traitement progressif par le niveau de communication 24 puis par le niveau de contrôle 26, d'une requête en une simple structure binaire clairement définie.

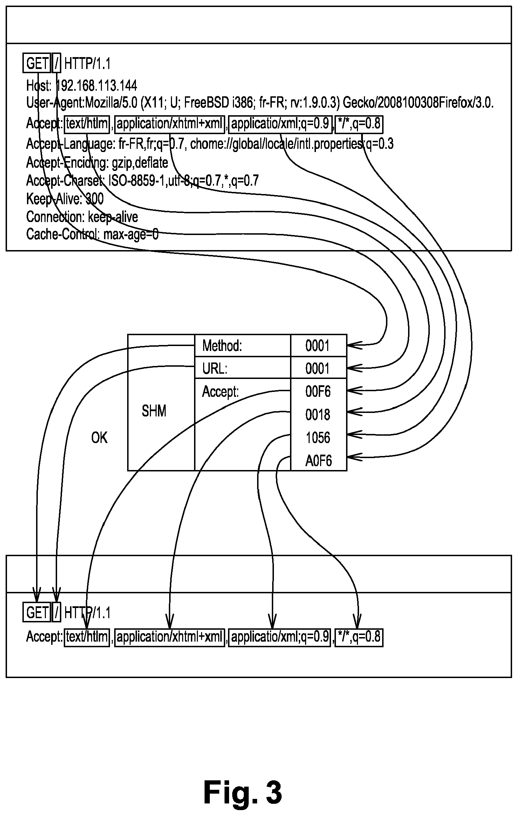

Une telle transformation est représentée sur la figure 3 qui illustre la décomposition d'une requête protocolaire HTTP en des données binaires codant les informations transmises par cette instruction HTTP.

Plus précisément, ces données comprennent une instruction « Get », une adresse URL, la version du protocole HTTP utilisé et les formats de fichier pris en compte par un logiciel d'exploration ou butineur.

Ces données binaires, représentées sous la forme d'un tableau par soucis de clarté, sont ensuite transmises au niveau 36 de contrôle du sous-système sécurisé par l'intermédiaire d'une mémoire partagée 29 entre les deux sous-systèmes.

A cet effet, un protocole limitativement défini est utilisé. Un tel protocole définit l'ensemble des requêtes pouvant être émises par le niveau 26 de contrôle du réseau non sécurisé, de telle sorte que les champs de données requis pour ces requêtes peuvent, d'une part, être prédéterminées et, d'autre part, être remplis par des données binaires codant les informations identifiées dans la requête reçue.

Ainsi, les requêtes transmises par le réseau 20 non sécurisé via le serveur passerelle 27 sont traitées par le sous-système non sécurisé pour extraire de ces dernières des données caractéristiques des requêtes, ces données caractéristiques étant transmises au sous-système sécurisé via le niveau de contrôle 26 de ce sous-système non sécurisé.

Par la suite, le sous-système sécurisé réécrit la requête conformément à son niveau 34 de communication, par exemple selon un protocole HTTP, sur la base des données caractéristiques préalablement extraites. Par la suite, cette requête est transmise via le niveau 32 de communication au serveur destinataire qui peut alors être valablement et sûrement forcé.

Une telle mise en forme des données est représentée sur la figure 3 à partir des données binaires précédemment obtenues à partir d'une requête HTTP.

En retour, la réponse du serveur destinataire est reçue par le niveau média 32, puis 34 de communication afin d'aboutir au niveau 36 de contrôle.

Ce niveau 36 de contrôle peut alors transmettre les données binaires, obtenues à partir de la réponse, à travers la mémoire partagée 29 afin que cette dernière la transmette au requérant via les niveaux 26, 24 puis 22 du sous-système non sécurisé.

Il apparaît qu'un serveur-passerelle conforme à l'invention ne vise pas à bloquer des bogues et/ou des attaques mais à limiter leurs conséquences sur le réseau sensible puisque l'ensemble des requêtes émises dans le réseau sensible par ce serveur sont des requêtes validées par leur réécriture, ces requêtes validées ne correspondant pas exactement à le requête initiale. La sécurité de la passerelle est ainsi assurée par l'architecture du serveur.

En résumé, chaque sous-système agit comme un sas ne pouvant communiquer avec l'autre sous-système que par l'intermédiaire d'une mémoire dans laquelle sont enregistrées des données binaires codant les informations identifiées dans une requête reçue en entrée d'un des sous-systèmes dans des champs prédéfinis.

De la sorte, les sous-systèmes ne communiquent que par l'intermédiaire de leur niveau de contrôle, particulièrement fiable par la présence d'un micronoyau, et au moyen de données dont la portée est limitée au champ prédéfini.

La présente invention est susceptible de nombreuses variantes. Notamment, la description effectuée ci-dessous de l'invention présente un micronoyau 38 comprenant le contrôleur IPC 25 mais, en fonction des variantes et des critères utilisés pour définir un micronoyau, ce contrôleur 25 IPC peut être localisé en dehors de micronoyau 38.

## Revendications

1. Serveur passerelle (27) **caractérisé en ce qu'**il comprend :
- un premier sous-système (22, 24, 26) avec un niveau média (22), un niveau (24) de communication et un niveau (26) de contrôle,
- un second sous-système (32, 34, 36) avec un second niveau média (32), un second niveau (34) de communication et un second niveau (36) de contrôle,
- un micronoyau (38) et un contrôleur (25) d'IPC (« *Inter Process Communication* », en anglais) adapté pour gérer des communications entre les ressources du serveur allouées au premier sous-système, d'une part, et pour gérer également des communications entre les ressources du serveur allouées au second sous-système, d'autre part, et
- une mémoire (29) partagée en lecture et en écriture, établie sous contrôle du micronoyau et du contrôleur d'IPC, pour la transmission de requêtes entre le niveau de contrôle du premier sous-système et le niveau de contrôle du second sous-système.

2. Serveur selon la revendication 1, dans lequel chacun des premier et second sous-systèmes comprend des moyens pour coder des informations, reçues dans une requête conforme à un protocole de communication réseau, en une structure binaire conforme à un protocole de communication entre le niveau de contrôle du premier (26) sous-système et le niveau de contrôle du second (36) sous-système.

3. Serveur selon la revendication 2 dans lequel chacun des premier et second sous-système (22, 24, 26 ; 32, 34, 36) comprend des moyens pour coder les informations en une structure binaire après traitement desdites informations dans le niveau de communication (24 ; 34) puis dans le niveau (26 ; 36) de contrôle du sous-système.

4. Serveur selon la revendication 2 ou 3 comprenant en outre des moyens pour identifier, en fonction de la nature de la requête, des données caractéristiques de la requête devant être codées dans la structure binaire.

5. Serveur selon la revendication 2 comprenant en outre des moyens pour associer la requête reçue à une requêté prédéfinie dans une liste limitée de requêtes autorisées.

6. Serveur selon l'une quelconque des revendications précédentes dans lequel le micronoyau (38) comprend des moyens pour associer chaque application mise en oeuvre par un sous-système (22, 24, 26 ; 32, 34, 36) au contrôle d'une ressource du serveur.

7. Serveur selon l'une quelconque des revendications précédentes comprenant en outre des moyens pour limiter les communications de telle sorte que ni le niveau média (22) ni le niveau de communication (24) de l"un des premier et second sous-système ne puisse communiquer directement ni avec le niveau média (32) ni avec le niveau de communication (34), respectivement, de l'autre desdits premier et second sous-système sans l'intermédiaire des niveaux de contrôle (26, 36) desdits premier et second sous-systèmes.

8. Serveur selon l'une des revendications précédentes comprenant en outre des moyens pour analyser la syntaxe et la validité des protocoles filtrés par chaque couche utilisée dans le serveur.

9. Procédé de contrôle d'un serveur passerelle (27) comprenant un premier sous-système avec un niveau média (22), un niveau (24) de communication et un niveau (26) de contrôle, ainsi en outre qu'une second sous-système (32, 34, 36) avec un second niveau média (32), un second niveau (34) de communication et un second niveau (36) de contrôle, ce serveur (27) comprenant également un micronoyau (38) et un contrôleur (25) d'IPC (« *Inter Process Communication* », en anglais) gérant des communications entre les ressources du serveur allouées au premier sous-système, d'une part, et gérant également des communications entre les ressources du serveur allouées au second sous-système, d'autre part, procédé dans lequel on utilise la mémoire (29) du serveur partagée en lecture et en écriture, établie sous contrôle du micronoyau et du contrôleur d'IPC, pour transmettre des requêtes entre le niveau de contrôle du premier sous-système et le niveau de contrôle du second sous-système à l'aide des moyens d'un serveur conforme à l'une des revendications précédentes.

10. Produit programme d'ordinateur comprenant des instructions de code de programme enregistrées sur un support lisible par un ordinateur pour mettre en oeuvre le procédé de la revendication 9 lorsque ledit programme fonctionne sur un ordinateur.

## Patentansprüche

1. Gateway-Server (27), **dadurch gekennzeichnet, dass** er umfasst:
- ein erstes Teilsystem (22, 24, 26) mit einer Medienebene (22), einer Kommunikationseben (24) und einer Kontrollebene (26);
- ein zweites Teilsystem (32, 34, 36) mit einer zweiten Medienebene (32), einer zweiten Kommunikationsebene (34) und einer zweite Kontrollebene (36),
- einen Mikrokern (38) und einen IPC-Kontroller (25) (auf Englisch "*Inter Process Communication*"), der einerseits zum Verwalten der Kommunikation zwischen den Ressourcen des Servers geeignet ist, die dem ersten Teilsystem zugeordnet sind, und andererseits ebenfalls zum Verwalten der Kommunikation zwischen den Ressourcen des Servers, die dem zweiten Teilsystem zugeordnet sind, , und
- einen Speicher (29), der in Lesen und Schreiben unterteilt ist und unter der Kontrolle des Mikrokerns und des IPC-Kontrollers für die Übertragung von Anfragen zwischen der Kontrollebene des ersten Teilsystems und dem Kontrollsystem des zweiten Teilsystems erstellt ist.

2. Server gemäß Anspruch 1, bei dem das erste und zweite Teilsystem jeweils Mittel zum Kodieren der Informationen umfasst, umfasst, die in einer einem Netzkommunikationsprotokoll konformen Anfrage in einer einem Kommunikationsprotokoll konformen binären Struktur zwischen der Kontrollebene des ersten Teilsystems (26) und der Kontrollebene des zweiten Teilsystems (36) empfangen sind.

3. Server gemäß Anspruch 2, bei dem jeweils das erste und zweite Teilsystem (22, 24, 26; 32, 34, 36) Mittel zum Kodieren der Informationen in einer binären Struktur nach der Verarbeitung der genannten Informationen in der Kommunikationsebene (24; 34) und dann in der Kontrollebene (26; 36) des Teilsystems umfasst.

4. Server gemäß Anspruch 2 oder 3, umfassend darüber hinaus Mittel zum Identifizieren der charakteristischen Daten der Anfrage, die in der binären Struktur kodiert werden sollen, in Abhängigkeit von der Art der Anfrage.

5. Server gemäß Anspruch 2, umfassend darüber hinaus Mittel zum Zuordnen der empfangenen Anfrage an eine vordefinierte Anfrage in einer begrenzten Liste von zugelassenen Anfragen.

6. Server gemäß irgendeinem der voranstehenden Ansprüche, bei dem der Mikrokern (38) Mittel zum Zuordnen jeder durch ein Teilsystem (22, 24, 26; 32, 34, 36) umgesetzten Anwendung zur Kontrolle einer Ressource des Servers umfasst.

7. Server gemäß irgendeinem der voranstehenden Ansprüche, umfassend darüber hinaus Mittel zum Begrenzen der Kommunikation derart, dass weder die Medienebene (22) noch die Kommunikationsebene (24) entweder des ersten oder des zweiten Teilsystems direkt weder mit der Medienebene (32) noch mit der Kommunikationsebene (34) bzw. mit dem jeweils anderen des ersten und zweiten Teilsystems ohne Zwischenschaltung der Kontrollebenen (26, 28) der genannten ersten und zweiten Teilsysteme kommunizieren kann.

8. Server gemäß einem der voranstehenden Ansprüche, umfassend darüber hinaus Mittel zum Analysieren der Syntax und der Gültigkeit der Protokolle, die durch jede im Server verwendete Schicht gefiltert sind.

9. Kontrollverfahren eines Gateway-Servers (27), umfassend ein erstes Teilsystem mit einer Medienebene (22), einer Kommunikationsebene (24) und einer Kontrollebene (26) sowie darüber hinaus ein zweites Teilsystem (32, 34, 36) mit einer zweiten Medienebene (32), einer zweiten Kommunikationsebene (34) und einer zweiten Kontrollebene (36), wobei dieser Server (27) ebenfalls einen Mikrokern (38) und einen IPC-Kontroller (25) (auf Englisch "*Inter Process Communication*") umfasst, der einerseits die Kommunikation zwischen den Ressourcen des Servers verwaltet, die dem ersten Teilsystem zugeordnet sind, und andererseits ebenfalls die Kommunikation zwischen den Ressourcen des Servers verwaltet, die dem zweiten Teilsystem zugeordnet sind, wobei in dem Verfahren der Speicher (29) des Speichers verwendet ist, der in Lesen und Schreiben aufgeteilt ist und der unter der Kontrolle des Mikrokerns und des IPC-Kontrollers erstellt ist, um Anfragen zwischen der Steuerebene des ersten Teilsystems und der Steuerebene des zweiten Teilsystems mithilfe der Mittel eines Servers gemäß einem der voranstehenden Anfragen zu übertragen.

10. Computerprogramm-Produkt, umfassend Programmcode-Anweisungen, die auf einem von einem Computer lesbaren Träger gespeichert sind, um das Verfahren des Anspruchs 9 umzusetzen, wenn das genannte Programm auf einem Computer arbeitet.

## Claims

1. A gateway server (27) **characterised in that** it comprises:
- a first sub-system (22, 24, 26) with a media level (22), a communication level (24) and a control level (26),
- a second sub-system (32, 34, 36) with a second media level (32), a second communication level (34) and a second control level (36),
- a microkernel (38) and an IPC ("Inter Process Communication") controller (25) adapted to manage communications between the server resources allocated to the first sub-system, on the one hand, and to also manage communications between the server resources allocated to the second sub-system, on the other hand, and
- a reading and writing shared memory (29), set under the control of the microkernel and the IPC controller, for transmitting requests between the control level of the first sub-system and the control level of the second sub-system.

2. The server according to claim 1, wherein each of the first and second sub-systems comprises means for coding information, received in a request in accordance with a network communication protocol, into a binary structure in accordance with a communication protocol between the control level of the first sub-system (26) and the control level of the second sub-system (36).

3. The server according to claim 2, wherein each of the first and second sub-systems (22, 24, 26; 32, 34, 36) comprises means for coding the information into a binary structure after processing said information in the communication level (24; 34) and then in the control level (26; 36) of the sub-system.

4. The server according to claim 2 or 3, further comprising means for identifying, depending on the nature of the request, characteristic data of the request that have to be coded into the binary structure.

5. The server according to claim 2, further comprising means for associating the received request with a predefined request in a limited list of permitted requests.

6. The server according to any of the preceding claims, wherein the microkernel (38) comprises means for associating each application implemented by a sub-system (22, 24, 26; 32, 34, 36) with the control of a resource of the server.

7. The server according to any of the preceding claims, further comprising means for limiting communications such that neither the media level (22) nor the communication level (24) of one of the first and second sub-systems can directly communicate neither with the media level (32) nor with the communication level (34), respectively, of the other of said first and second sub-systems without the intervention of the control levels (26, 36) of said first and second sub-systems.

8. The server according to one of the preceding claims, further comprising means for analysing the syntax and validity of the protocols filtered by each layer used in the server.

9. A method for controlling a gateway server (27) comprising a first sub-system with a media level (22), a communication level (24) and a control level (26), as well as a second sub-system (32, 34, 36) with a second media level (32), a second communication level (34) and a second control level (36), this server (27) also comprising a microkernel (38) and an IPC ("Inter Process Communication") controller (25) managing communications between the server resources allocated to the first sub-system, on the one hand, and also managing communications between the server resources allocated to the second sub-system, on the other hand, in which method the reading and writing shared memory (29) of the server is used, which is set under the control of the microkernel and the IPC controller, for transmitting requests between the control level of the first sub-system and the control level of the second sub-system using the means of a server in accordance with one of the preceding claims.

10. A computer program product comprising program code instructions recorded in a computer readable medium to implement the method according to claim 9 when said program runs on a computer.
